# EUROPEAN PATENT APPLICATION

(11) **EP 4 404 117 A1**
(43) Date of publication of application: **24.07.2024**
(21) Application number: 23199351.0
(22) Date of filing: 25.09.2023
(51) Int. Cl.: G06Q 10/0639, G06F 16/24

(54) **METHOD FOR AUTOMATICALLY IDENTIFYING CHANGE CONTRIBUTORS**

(30) Priority: 19.01.2023 US 202318156764
(71) Applicant: Google LLC, Mountain View, CA 94043 (US)
(72) Inventor: LIU, Michael Yang, Mountain View, CA 94043 (US); MAHER, Richard A., Mountain View, CA 94043 (US); CHOU, Edward, Mountain View, CA 94043 (US); KONERU, Srirama, Mountain View, CA 94043 (US); HUSAIN, Batool Nadeem, Mountain View, CA 94043 (US); KIM, Cheolmin, Mountain View, CA 94043 (US)
(74) Representative: Betten & Resch

(57) **Abstract**

An aspect of the disclosed technology is a scalable method to derive drivers of change for composite metrics (*e.g.,* cost metrics and ratio metrics) in a time series data set. The disclosed technology comprises an automated mechanism that enables identification and deciphering of one or more drivers, *e.g.,* the largest contributors, or a composite metric change in a scalable manner.

## Description

### BACKGROUND

Data analytics is an important process used in supporting a variety of business operations including business intelligence (BI). Typically, users of BI applications require knowledge of why a metric has changed, e.g., change drivers or root causes. For example, if organizational costs increased or usage of a service has declined, the underlying root causes are key factors in remedying the changes. When a metric spans multiple data dimensions (e.g., locations, time periods, products, services, and consuming organizations) and/or layers of aggregation, determining one or more root causes is typically complicated. For example, a total cost summation may comprise costs from several sales regions or SKUs. Similarly, service usage may be from multiple user data sets, products, locations, etc. The multi-dimensionality of contributing causes adds to the difficulty of data analytics.

### SUMMARY

An aspect of the disclosed technology is a method or process for determining top drivers associated with a metric. The method comprises retrieving source data from one or more data marts, the source data comprising hierarchical time series data; analyzing key-value pairs associated with the source data to produce one or more top driver key-value pairs associated with the source data; receiving a request for a listing of top drivers based on one or more conditions and a contribution threshold, the contribution threshold corresponding to a change in the metric; and querying the one or more top driver key-value pairs based on the one or more conditions and contribution threshold to produce a data set of top drivers associated with the metric.

In accordance with this aspect of the disclosed technology the hierarchical time series data may comprise data associated with the metric and a dimension. Further, the dimension may comprises one of location, products, time periods, or organization. In addition, the key-value pairs may correspond to metric-dimension pairs. Further, the metric may comprise one of operational costs or resource usage.

Further in accordance with this aspect of the disclosed technology, querying may comprise aggregating source data that match the condition and the contribution threshold. Further, querying may comprise collecting top driver key-value pairs that match the condition. In addition, querying may comprise joining the collected top driver key-value pairs and aggregated source data.

An aspect of the disclosed technology is a system for determining top drivers associated with a metric. The system comprises one or more first computing devices coupled to one or more first memories, the one or more first memories storing a first set of instructions that cause the one or more first computing devices to: retrieve source data from one or more data marts, the source data comprising hierarchical time series data, analyze the source data to produce one or more solution time intervals that contributed a metric data value associated with the metric above a metric threshold value, and provide the one or more solution time intervals to a top driver data mart. The system may also comprise one or more second computing devices coupled to one or more second memories, the one or more second memories storing a second set of instructions that cause the one or more second computing devices to: aggregate data associated with one or more solution time intervals that match one or more conditions, the one or more conditions including a date attribute, collect the data associated with one or more solution time intervals that match the one or more conditions, and join the collected data and aggregated data based on the date attribute to produce one or more top drivers.

In accordance with this aspect of the disclosed technology, the system may comprise a third computing device coupled to the second computing device, the third computing device providing an application programming interface to provide requests received at a user interface to the second computing device.

In accordance with this aspect of the disclosed technology, the first set of instructions to analyze the source data may comprise analyzing key-value pairs associated with the source data to produce the one or more the one or more solution time intervals. Further, the one or more solution time intervals comprise one or more top driver key-value pairs. In addition, the key-value pairs may correspond to metric-dimension pairs. Further, the metric comprises one of operational costs or resource utilization.

### BRIEF DESCRIPTION OF THE DRAWINGS

FIG. 1 illustrates an example of a process in accordance with one or more aspects of the disclosed technology.
FIG. 2 illustrates an example of a system architecture in accordance with one or more aspects of the disclosed technology.
FIG. 3 illustrates an example of source data in accordance with one or more aspects of the disclosed technology.
FIG. 4 illustrates an example of source data in accordance with one or more aspects of the disclosed technology.
FIG. 5 illustrates an example of an output time interval format in accordance with one or more aspects of the disclosed technology.
FIG. 6 illustrates an example of an API request in accordance with one or more aspects of the disclosed technology.
FIG. 7 illustrates an example of a conversion between responses in accordance with one or more aspects of the disclosed technology.
FIG. 8 illustrates an example of an output in accordance with one or more aspects of the disclosed technology.
FIG. 9 illustrates a computing device in accordance with one or more aspects of the disclosed technology.

### DETAILED DESCRIPTION

An aspect of the disclosed technology is a scalable method to derive drivers of change for metrics, e.g., composite metrics (such as cost metrics) and ratio metrics, in a time series data set. The disclosed technology comprises an automated mechanism that enables identification and deciphering of one or more drivers, e.g., the largest contributors, or a composite metric change in a scalable manner. Composite metrics are aggregate metrics that are summed across multiple layers (e.g., an organization's overall costs consisting of individual team costs or a metric that is a relative ratio between metrics (A/B ratio where A and B are themselves metrics). More generally, a metric is a parameter or value used to track, monitor, and assess the performance of a process (e.g., a business process, network usage, network latency). The disclosed technology provides methods and systems to determine one or more drivers for changes (e.g., root causes) to a given metric.

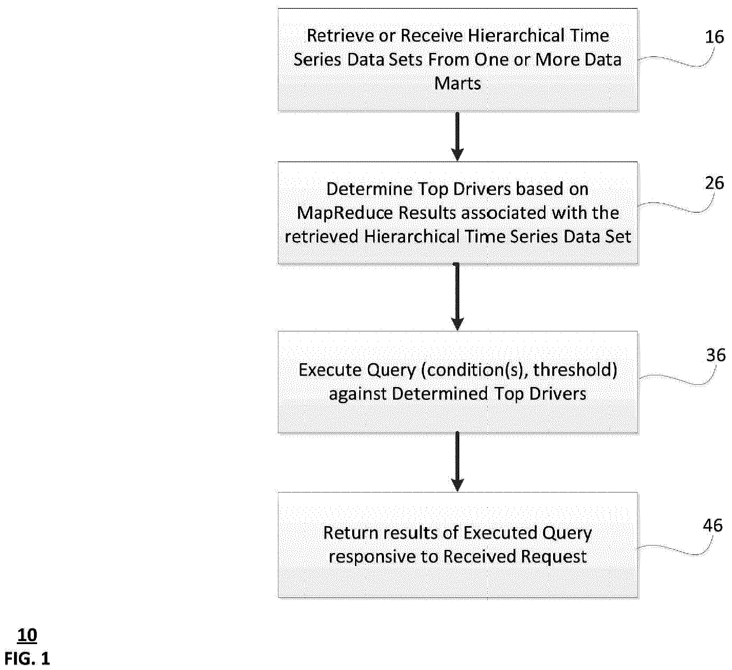

FIG. 1 illustratively depicts the steps of process 10 in accordance with one or more aspects of the disclosed technology. At step 16 of the process 10, hierarchical time series data sets are retrieved or received from one or more data marts. Each data mart may house data sets for a given metric associated with a business function. For example, one data mart may house data associated with operational costs, another may house data associated with usage of a service, while another may house data associated with product performance. The data sets within each data mart comprise a time series that tracks data associated with that metric. The hierarchical nature of the data may comprise having data of different granularity. For example, cost data may comprise cost data for operations associated with a region, areas within the region, and locations within the areas. As another example, usage data may comprise such data for an entire fleet, usage data for clusters within the fleet, and usage data for hosts within a cluster.

At step 26, the hierarchical time series data sets obtained from the data marts are processed to determine top drivers for a given metric. Within each data mart, the data sets may be stored as key-value (or key, value) pairs. The process of determining the top drivers may therefore comprise performing MapReduce operations over the hierarchical time series data sets for each metric to determine top drivers for a given metric as a time series. As a result of this processing, one or more databases of top drivers may be generated. These databases, in effect, comprise top driver data marts for a given metric. Taking cost as a metric for example, a data mart of top drivers may include the top drivers for costs across different dimensions (e.g., region, area, location, product). As such, top driver data mart for costs may comprise a time series of cost data across each dimension.

At step 36, in response to receiving the request for a top driver based on one or more given conditions and a threshold associated with a metric, the process executes a query to the top driver data marts or databases. Keeping with the example of a request associated with cost as the metric, the request may specify a time period as a condition and a 10% or greater increase in cost as a threshold. The query would then extract top drivers during the time period that meet the threshold criteria from the top driver data marts. The query may comprise determining which data sets within the data mart during the time period indicate a 10% increase in cost. Because the cost data mart is multi-dimensional, the extracted data sets may comprise multi-dimensions. For example, assuming the cost is usage cost associated with a fleet (e.g., logical organization of clusters and other resources, e.g., hosts or servers, in a cloud computing environment), the extracted data may comprise a time series of usage costs for the fleet over the time period, the highest cost increase incurred for a cluster within the fleet, the highest cost increase incurred for a region associated with the fleet, and the highest cost increase incurred for a datacenter within the fleet, during the time period.

At step 46, the results from the query responsive to the received request are provided to a user. The results may be provided in the form of one or more time charts that also provide context information as to the top drivers or root causes that may have effected the change in cost.

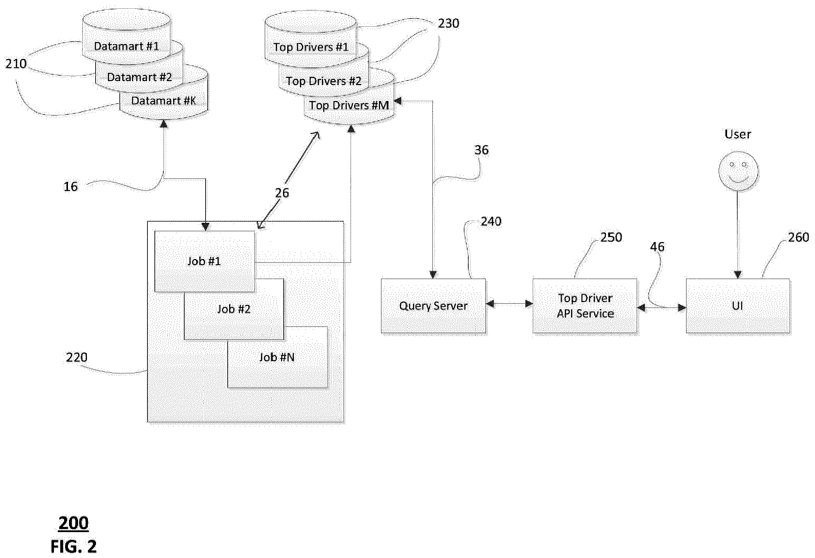

FIG. 2 illustratively depicts a system architecture 200 in accordance with one or more aspects of the disclosed technology. The system 200 includes a plurality of data marts 210 numbered 1 through K. Data marts 210 are communicatively coupled to a plurality of jobs numbered 1 through N, which are executed in computing environment 220. Computing environment 220 may comprise one or more processing devices with associated memory and instructions that enable jobs 1 through N to be executed. Jobs 1 through N are communicatively coupled to top driver databases or top driver data marts 230 numbered 1 through M. K, N, and M may include integer values of 1 or greater.

The top driver data marts 230 are communicatively coupled to a query server 240. The query server 240 queries the top driver data marts 230 in response to requests it receives from a top driver application programming interface (API) service 250. Top driver API service 250 is communicatively coupled to a user interface (UI) 260 that receives a request from a user. The API service 250 and UI 260 may be provided on the same computing device.

As shown in FIG. 2, the system 200 has been annotated to show steps 16 through 46 of FIG. 1 to provide an association of the steps with the system architecture. Data marts, such as data mart 210 and top drivers 230, may comprise one or more subject oriented databases that may be formed by partitioning portions or segments of an enterprise's data warehouse. For instance, data marts 210 comprise databases that are oriented toward different metrics in accordance with an aspect of the disclosed technology. Similarly, the top driver data marts 230 may comprise databases that are oriented towards top drivers that are output by jobs 1 through N.

As indicated above, the different components of the system 200 are communicatively coupled as shown in FIG. 2. "Communicatively coupled" may include communications over a network between co-located or remotely located components, e.g., components 210, 220, 230, 240, 250, and 260. For instance, data marts 210 may be located in a different region, location, or data warehouse than top driver data marts 230. Similarly, processing device 220, server 240, API service 250 and UI 260 may be located remotely from each other and from data marts 210 and top driver data marts 230.

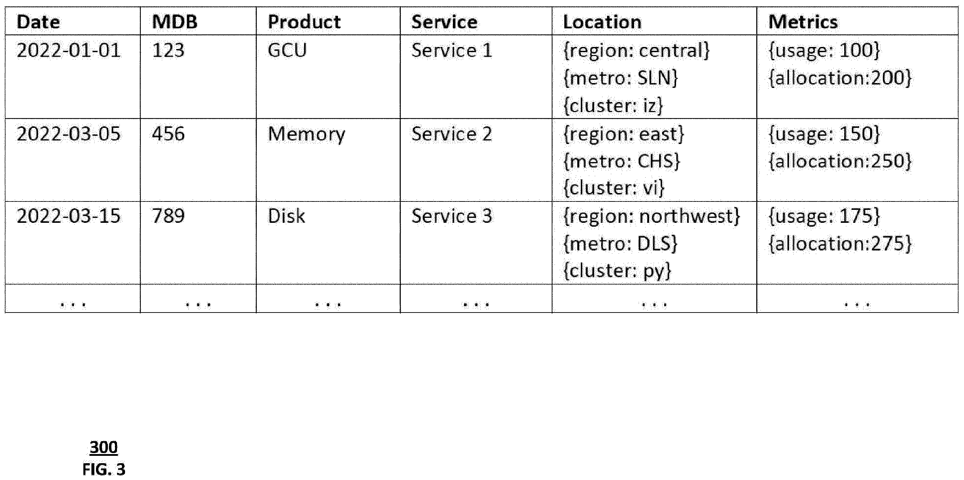

The input data source to jobs 1 through N are provided source data from data marts 210. As discussed in relation to FIG. 1, source data may be retrieved as part of executing a job. The source data will typically comprise data stored in tabular form. The source data is usually hierarchical, in that each row in a source table represents a lead node in the hierarchy tree. An example of a simplified source table 300 is illustrated in FIG. 3. As shown in FIG. 3, the source table includes a date entry, a Machine Database (MDB), a product, service, location, and metrics. In accordance with an aspect of the disclosed technology, the input source data is joined, flattened, and sorted. For instance, in the example of FIG. 3, since the MDB is only the leaf node of the product area (PA) hierarchy, we need to join with the Principal table to get the complete PA hierarchy path for this MDB (for example, Apps, Apps Core, search and Intelligence, apps-intelligence-data donation). In some examples, PA is one level below a fleet level and may comprise YouTube, Search, etc. Examples of an MDB may include an accounting group that uses a machine. A Principal table may comprise for example a list of resource consumers or suppliers. Since the metrics in the input data are contained in nested proto format, the metrics data should be flattened so that each metric has its own column for aggregation. The metrics should also be aggregated across the entire dimensional space. For example, in the case of a Principal Apportioned Data Mart (PADM), the dimensions (unique key) that the metrics are aggregated may comprise: date,level0,level1,level2,level3,level4,level5,level6,product,service,region,metro,cluster where levels 0-6 are the IDs of the PA levels from top to bottom.

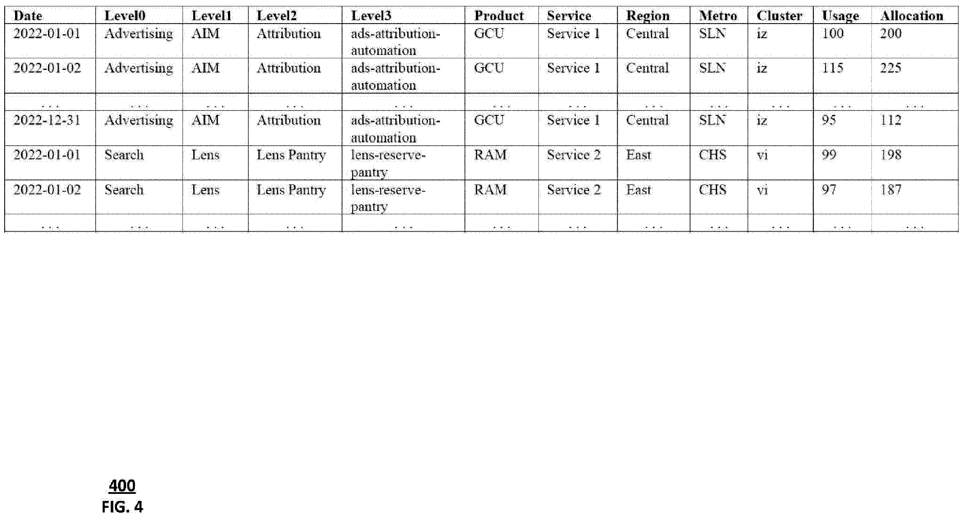

As an example, input source data, such as that shown in FIG. 3, would appear as shown in FIG. 4 after joining, flattening, and sorting. The table 400 will have a corresponding row for each unique key in the table. In a practical implementation, the total number of rows will be on the order of hundreds of millions. These rows may be written to temporary capacitor file sets, so that they can be consumed by the algorithm implemented by jobs 220.

In this regard, data from data marts 210 may take the form of table 400 and be fed or retrieved by jobs 220. Jobs 220 implement an algorithm that processes the data to determine causes associated with a given change within a time series data cube. The algorithm may operate to: 1) identify large segments of change (e.g., change that meets some minimum absolute and percent change); and 2) scoping the segments to the appropriate level. As an example of segment scoping, let's assume that the leaf node results have flattened paths, e.g., x-> y-> z, x-> v-> w and query for all results scoped to "x." The query would return all results that have an "x" as the ancestor in the tree. The algorithm expects the input data sets to contain the leaf node time series associated with the source data. An appropriate minimum change threshold and minimum percent change threshold are provided as parameters to the algorithm. These thresholds will be different for different data marts.

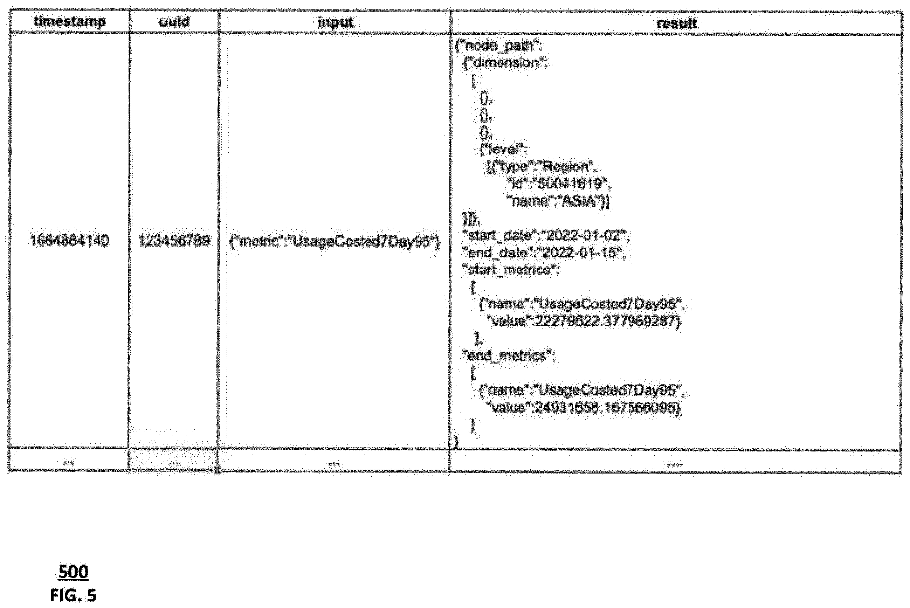

An example of the output time intervals 500 of the algorithm is as shown in FIG. 5. The output is stored in top driver data mart 230. Each row in the table 500 is one solution time interval found by the algorithm that made significant contributions to the overall change in metric value higher in the hierarchy tree, e.g., the top drivers. The node_path in the result points to where in the hierarchy tree this solution interval belongs. Usually, there are on the order of hundreds of thousands of solution intervals produced by the algorithm per data mart.

Query server 240 functions to provide a service to query output (e.g., top driver tables) produce by jobs 220 using the algorithm. The service functions to generate reports and perform online analytical processing (OLAP)-style queries over large and heterogeneous data sources. Server 240 provides multidimensional analysis over base data from multiple data sources, and materializes data to support fast, interactive analysis. The service schema for processing the top driver tables produced by the algorithm performed by jobs 220 and stored in top driver data mart 230 involves creating and adding a cube definition, RVL views for various release environments, and a source definition:
- cube definition: A dimension consisting of the attributes in Top Driver tables.
- RVL views: Data sources obtained from Top Driver tables with an additional date field such that each top driver appears twice in RVL views with the value of the additional field being the start date for one and the end date for the other. The purpose of this pre-processing is to make the service query of generating aggregate metrics at start and end dates simple. For example, the metrics can be defined using aggregation with a slicer on the added date field equal to the start date or the end date.
- source definition: A mapping between the attributes in the cube definition and the columns in the RVL views.

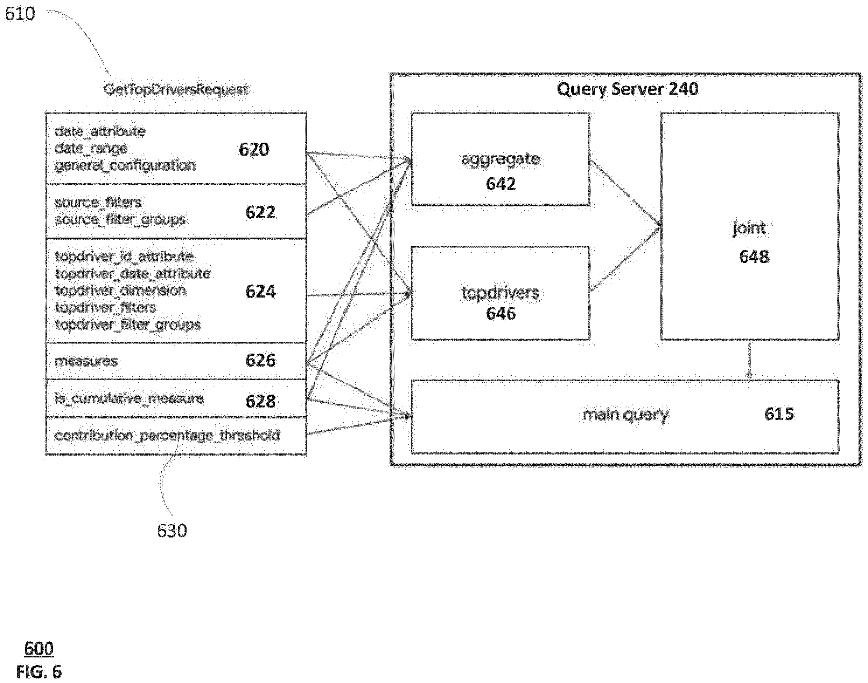

In response to receiving a query for top drivers via the top driver API service 250, query server 240 accesses top driver data mart 230 to process those output time intervals, such as interval 500, that meets certain conditions and a threshold. FIG. 6 illustrates a diagram 600 that shows an example of how an API request 610 generated in response to a user query received via UI 260 may be converted to a main query 615 by the query server 240 to query the top driver data produced by jobs 220 and stored in top driver data marts 230.

The API request 610 includes a first field grouping 620, which includes date_attribute, date_range, and general_configuration fields. Second field grouping 622 is generally directed to filter settings and includes source_filters and source_filter_groups fields. Field grouping 624 is generally directed to the top driver being requested, and includes topdriver_id_attribute, topdriver_date_attribute, topdriver_dimension, topdriver_filters, and topdriver_filter_groups fields. The API request 610 also includes a measures field 626 and a is_cumulative_measure field 628. API request 610 also includes a contribution_percentage_threshold field 630.

Query server 240 implements an aggregate function 642 that aggregates the measures 626, 628 of source data that match source_filters, source _filter_groups, and date_range by date_attribute. The general_configuration field is used to set the parameters of the RVL view of the source data. For example, if the parameter fetch_dollar_table in general_configuration is true, the RVL view will be constructed from source data with costed metrics measured in dollars. On the other hand, if is_cumulative_measure is true, cumulative aggregate measures will be added to this data source. Top driver function 646 collects top drivers that match date_range, topdriver_filters, topdriver _filter_groups, and measures from the top driver RVL view configured by general_configuration. source_filters and topdriver_filters typically represent the same thing. However, since underlying attributes in the two filters belong to different dimensions, they are differentiated in the query. Joint function 648 obtains a data source by joining "topdrivers" and "aggregate" data sources on the date_attribute. Using joint data source function 648, main query 615 computes the contribution of each top driver and returns those having higher contributions than contribution_percentage_threshold. Depending on the type of measure, different logic may be used to define a contribution:
∘ Non-cumulative single measure:
   ▪ *100*^{∗}*(top_driver_value_end_date* / *aggregate_value_end_date - top_driver_value_start_date* / *aggregate_value_start_date)*
∘ Cumulative single measure:
   ▪ *100*^{∗}*(top_driver_cumulative_value_end_date - top_driver_cumulative_value_start_date)* / *(cumulative_aggregate_value_end_date - cumulative_aggregate_value_start_date)*
∘ Ratio measure:
   ▪ *100*^{∗}*(top_driver_numerator_value_end_date* / *aggregate_denominator_value_end_date - top_driver_numerator_value_start_date* / *aggregate_denominator_value_start_date)*

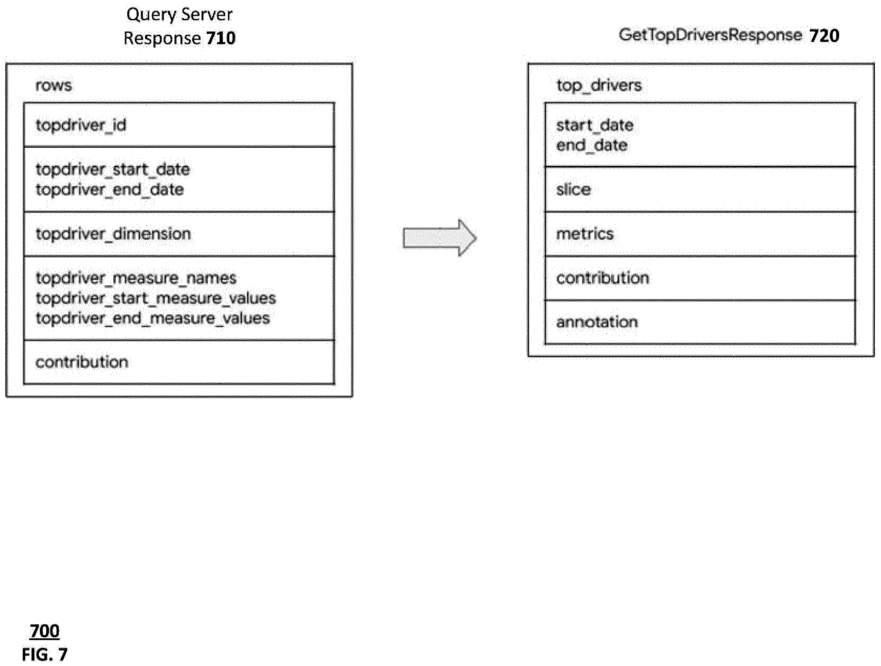

The response from the query server 240 is returned to the top driver API service 250, converted back to a GetTopDriversResponse format, and sent to the UI 260. An example of a possible conversion 700 from a query server response 710 to a UI response 720 is shown in FIG. 7. Correspondence between response 710 and UI 720 is as follows:
- start_date, end_date: topdriver_start_date, topdriver_end _date.
- slice: a map from top driver attributes to string values. Only top driver attributes with non-null values may be included in the slice.
- metrics: a repeated message of name, start_value, end_value constructed from top _driver _measure _names, topdriver_start_measure _values, topdriver end _measure _values.
- contribution: contribution
- annotation: a text describing the change of metrics in a top driver and its impact.

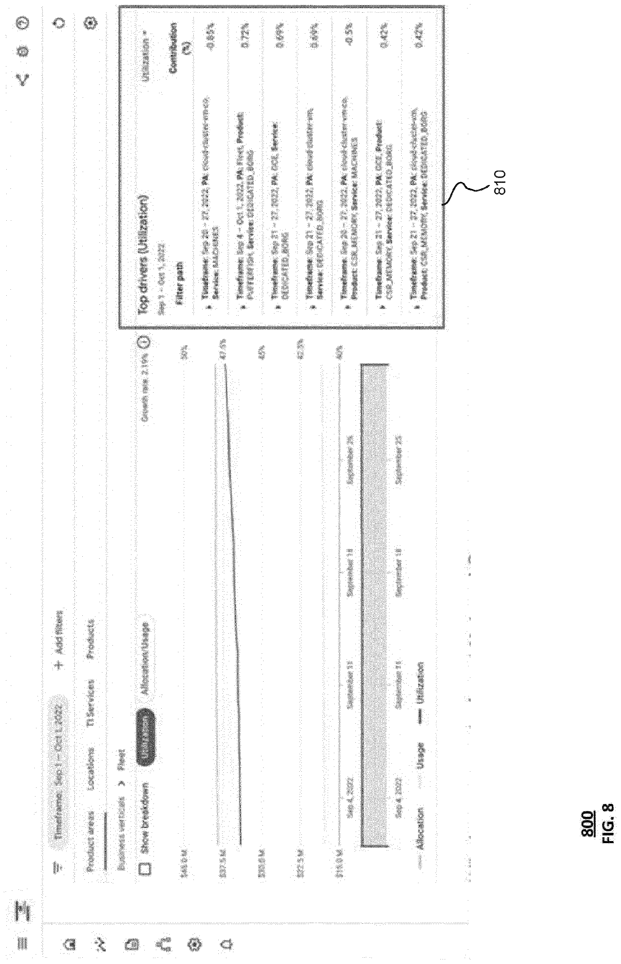

Turning now to FIG. 8, there is shown an example of the output 800 that may be presented at UI 260. As shown, the top driver results may be shown as table 810 sorted by absolute contribution percentage hierarchy level. As shown in the example, the top driver information provides in-context information that indicates possible root causes for changes in utilization costs over a time frame in September 2022, as indicated by the time range of the solution at the bottom of the time series graph.

As indicated above, one or more of the components that make up the system 200 or that operate to implement the processes described above may comprise one or more computing devices. For instance, computing environment 220 may comprise a computing device that operates based on instructions that are included as part of jobs 1 through N. Similarly, query server 240, API service 250 and UI 260 may be implemented via one or more computing devices. The data marts may comprise databases that are segmented to store specific types of data.

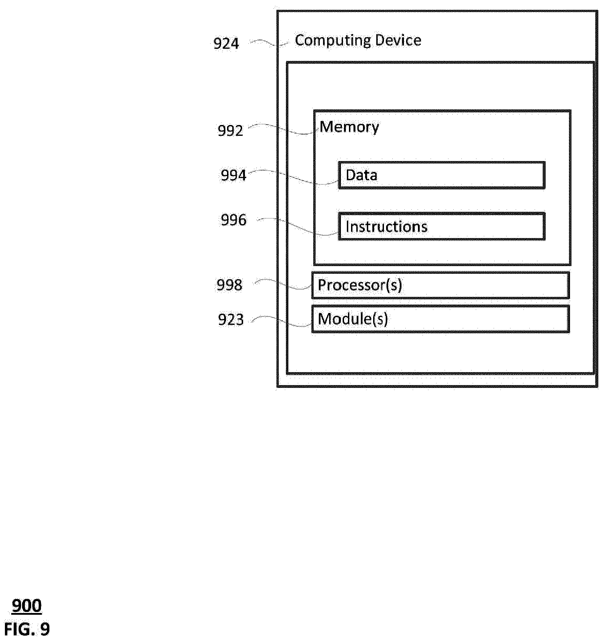

The computing device(s) may comprise a computing device 900 such as that shown by example in FIG. 9. The computing device 900 can take on a variety of configurations, such as, for example, a controller or microcontroller, a processor, or an ASIC. In some instances, computing device 900 may comprise a server or host machine that carries out the operations discussed above. In other instances, such operations may be performed by one or more of the computing devices in a data center. The computing device may include memory 992, which includes data 994 and instructions 996, and a processing element 998, as well as other components typically present in computing devices (e.g., input/output interfaces for a keyboard, display, etc.; communication ports for connecting to different types of networks).

The memory 992 can store information accessible by the processor 998, including instructions 996 that can be executed by the processor 998. Memory can also include data 994 that can be retrieved, manipulated, or stored by the processing element 998. The memory 992 may be a type of non-transitory computer-readable medium capable of storing information accessible by the processing element 998, such as a hard drive, solid state drive, tape drive, optical storage, memory card, ROM, RAM, DVD, CD-ROM, write-capable, and read-only memories. The processing element 998 can be a well-known processor or other lesser-known types of processors. Alternatively, the processing element 998 can be a dedicated controller such as an ASIC.

The instructions 996 can be a set of instructions executed directly, such as machine code, or indirectly, such as scripts, by the processor 998. In this regard, the terms "instructions," "steps," and "programs" can be used interchangeably herein. The instructions 996 can be stored in object code format for direct processing by the processor 998, or can be stored in other types of computer language including scripts or collections of independent source code modules that are interpreted on demand or compiled in advance. For example, the instructions 996 may include instructions to carry out the methods and functions discussed above in relation to generating data quality annotations, metrics, etc.

The data 994 can be retrieved, stored, or modified by the processor 998 in accordance with the instructions 996. For instance, although the system and method are not limited by a particular data structure, the data 994 can be stored in computer registers, in a relational database as a table having a plurality of different fields and records, or in XML documents. The data 994 can also be formatted in a computer-readable format such as, but not limited to, binary values, ASCII, or Unicode. Moreover, the data 994 can include information sufficient to identify relevant information, such as numbers, descriptive text, proprietary codes, pointers, references to data stored in other memories, including other network locations, or information that is used by a function to calculate relevant data.

FIG. 9 functionally illustrates the processing element 998 and memory 992 as being within the same block, but the processor 998 and memory 992 may instead include multiple processors and memories that may or may not be stored within the same physical housing. For example, some of the instructions 996 and data 994 may be stored on a removable CD-ROM and others may be within a read-only computer chip. Some or all of the instructions and data can be stored in a location physically remote from, yet still accessible by, the processor 998. Similarly, the processor 998 can include a collection of processors, which may or may not operate in parallel.

One or more aspects of the disclosed technology may comprise one or more combinations of the following features and sub-features:
F1. A method for determining top drivers associated with a metric, comprising:
   retrieving source data from one or more data marts, the source data comprising hierarchical time series data;
   analyzing key-value pairs associated with the source data to produce one or more top driver key-value pairs associated with the source data;
   receiving a request for a listing of top drivers based on one or more conditions and a contribution threshold, the contribution threshold corresponding to a change in the metric; and
   querying the one or more top driver key-value pairs based on the one or more conditions and contribution threshold to produce a data set of top drivers associated with the metric.
F2. The method of F1, wherein the hierarchical time series data comprises data associated with the metric and a dimension.
F3. The method of claim F2, wherein the dimension comprises one of location, products, time periods, or organization.
F4. The method of any one of F2 or F3, wherein the key-value pairs correspond to metric-dimension pairs.
F5. The method of any one of F1 through F4, wherein the metric comprises one of operational costs or resource usage.
F6. The method of any one of F1 through F5, wherein querying comprises aggregating source data that match the condition and the contribution threshold.
F7. The method of any one of F1 through F6, wherein querying comprises collecting top driver key-value pairs that match the condition.
F8. The method of any one of F1 through F7, wherein querying comprises joining the collected top driver key-value pairs and aggregated source data.
F9. A system for determining top drivers associated with a metric, comprising:
   one or more first computing devices coupled to one or more first memories, the one or more first memories storing a first set of instructions that cause the one or more first computing devices to:
      retrieve source data from one or more data marts, the source data comprising hierarchical time series data,
      analyze the source data to produce one or more solution time intervals that contributed a metric data value associated with the metric above a metric threshold value, and
      provide the one or more solution time intervals to a top driver data mart; and
   one or more second computing devices coupled to one or more second memories, the one or more second memories storing a second set of instructions that cause the one or more second computing devices to:
      aggregate data associated with one or more solution time intervals that match one or more conditions, the one or more conditions including a date attribute,
      collect the data associated with one or more solution time intervals that match the one or more conditions, and
      join the collected data and aggregated data based on the date attribute to produce one or more top drivers.
F10. The system of F9, comprising a third computing device coupled to the second computing device, the third computing device providing an application programming interface to provide requests received at a user interface to the second computing device.
F11. The system of F9 or F10, wherein the first set of instructions to analyze the source data comprise analyzing key-value pairs associated with the source data to produce the one or more the one or more solution time intervals.
F12. The system of any one of F9 through F11, wherein the one or more solution time intervals comprise one or more top driver key-value pairs.
F13. The system of F11, wherein the key-value pairs correspond to metric-dimension pairs.
F14. The system of F 12, wherein the metric comprises one of operational costs or resource utilization.

Although the invention herein has been described with reference to particular examples, it is to be understood that these examples are merely illustrative of the principles and applications of the present invention. It is therefore to be understood that numerous modifications may be made to the examples and that other arrangements may be devised without departing from the scope of the present invention as defined by the appended claims.

## Claims

1. A method for determining top drivers associated with a metric, comprising:
retrieving source data from one or more data marts, the source data comprising hierarchical time series data;
analyzing key-value pairs associated with the source data to produce one or more top driver key-value pairs associated with the source data;
receiving a request for a listing of top drivers based on one or more conditions and a contribution threshold, the contribution threshold corresponding to a change in the metric; and
querying the one or more top driver key-value pairs based on the one or more conditions and contribution threshold to produce a data set of top drivers associated with the metric.

2. The method of claim 1, wherein the hierarchical time series data comprises data associated with the metric and a dimension.

3. The method of claim 2, wherein the dimension comprises one of location, products, time periods, or organization.

4. The method of claim 3, wherein the key-value pairs correspond to metric-dimension pairs.

5. The method of claim 4, wherein the metric comprises one of operational costs or resource usage.

6. The method of one of claims 1 to 5, wherein querying comprises aggregating source data that match the condition and the contribution threshold.

7. The method of claim 6, wherein querying comprises collecting top driver key-value pairs that match the condition.

8. The method of claim 7, wherein querying comprises joining the collected top driver key-value pairs and aggregated source data.

9. A system for determining top drivers associated with a metric, comprising:
one or more first computing devices coupled to one or more first memories, the one or more first memories storing a first set of instructions that cause the one or more first computing devices to:
retrieve source data from one or more data marts, the source data comprising hierarchical time series data,
analyze the source data to produce one or more solution time intervals that contributed a metric data value associated with the metric above a metric threshold value, and
provide the one or more solution time intervals to a top driver data mart; and
one or more second computing devices coupled to one or more second memories, the one or more second memories storing a second set of instructions that cause the one or more second computing devices to:
aggregate data associated with one or more solution time intervals that match one or more conditions, the one or more conditions including a date attribute,
collect the data associated with one or more solution time intervals that match the one or more conditions, and
join the collected data and aggregated data based on the date attribute to produce one or more top drivers.

10. The system of claim 9, comprising a third computing device coupled to the second computing device, the third computing device providing an application programming interface to provide requests received at a user interface to the second computing device.

11. The system of claim 9, wherein the first set of instructions to analyze the source data comprise analyzing key-value pairs associated with the source data to produce the one or more the one or more solution time intervals.

12. The system of claim 10, wherein the one or more solution time intervals comprise one or more top driver key-value pairs.

13. The system of claim 11, wherein the key-value pairs correspond to metric-dimension pairs.

14. The system of claim 12, wherein the metric comprises one of operational costs or resource utilization.
